# EUROPEAN PATENT APPLICATION

(11) **EP 4 843 396 A1**
(43) Date of publication of application: **25.11.2026**
(21) Application number: 25178091.2
(22) Date of filing: 21.05.2025
(51) Int. Cl.: A23L 2/38, A23L 2/52, A23L 2/66, A23L 2/84, A23L 33/21, C12C 12/00, C12C 12/02, C12C 12/04

(54) **FERMENTED NON-ALCOHOLIC PLANT-BASED BEVERAGE**

(71) Applicant: Brun, Ivana, 8600 Dübendorf Zürich (CH); Mishra, Kim, 8092 Zürich (CH)
(72) Inventor: Brun, Ivana, 8600 Dübendorf (CH); Kim, Mishra, 8092 Zürich (CH); Aebersold, Julian, 8008 Zürich (CH)

(57) **Abstract**

The present invention discloses a method to prepare a fermented non-alcoholic plant-based beverage which exhibits a Glycemic index below 70, the method comprising the steps of: (a) providing a liquid from plant-derived material comprising digestible carbohydrates that are degraded during fermentation and being essentially devoid of rapidly digestible carbohydrates that are not degraded during fermentation (b) introducing slowly digestible compounds that are not degraded during fermentation to the liquid creating the unfermented beverage (c) adding at least one microorganism to the unfermented beverage creating the inoculated unfermented beverage (d) fermenting the unfermented beverage creating the fermented non-alcoholic plant-based beverage wherein the fermented non-alcoholic plant-based beverage shows organoleptic properties substantially similar to an equivalent beverage having a Glycemic index above 70 compared to a glucose reference with the same digestible carbohydrate content.

## Description

### Technical Field

The invention describes the method to provide and the composition of a fermented non-alcoholic plant-based beverage that achieves a low Glycemic index without compromising the organoleptic properties compared to fermented non-alcoholic plant-based beverages with high Glycemic index.

### Background Art

Consumers are increasingly aware of the adverse effects associated with the consumption of alcoholic beverages and are shifting towards non-alcoholic beverages with similar taste and appeal. Furthermore, an increasing part of the global population is consuming too much rapidly digestible carbohydrates leading to an increased diabetes type II and impaired postprandial blood sugar regulation prevalence. Consequently, there is a lack of non-alcoholic beverages with low content of rapidly digestible carbohydrates to satisfy consumer needs.

Various approaches are currently used to produce fermented non-alcoholic plant-based beverages to surrogate alcoholic beverages such as beer, wine, cider, and sparkling wines amongst others as well as alternatives to fermented dairy beverages such as kefir, buttermilk, lassi, acidophilus milk amongst others. To produce the beverages either the alcohol containing beverage is produced and the ethanol removed via vacuum distillation or reverse osmosis or the formation of ethanol is limited by either choosing microorganisms that do not form ethanol or by limiting the microorganism metabolism with cold temperature or by limited substrate availability to be converted into ethanol or by engineering the metabolic pathway to promote aerobic biomass production.

Each approach is associated with challenges to meet the targeted organoleptic properties of the to be imitated alcoholic beverage. Non-alcoholic beverages produced via alcohol removal by reverse osmosis or vacuum distillation are typically deficient of characteristic aroma compounds produced during fermentation such as isoamyl-acetate or acetaldehyde that need to be added into the final beverage after alcohol removal. Furthermore, reverse osmosis or vacuum distillation machines require large batch sizes and production volumes and are typically not affordable by smaller breweries. Approaches where formation of alcohol is limited potentially lead to high residual wort aldehydes leading to off-flavors and excessive sweetness in the final product. Approaches with aerobic fermentations and resulting biomass production are facing excessive aroma active compound production if the fermentable sugar content is too high in the unfermented liquid. It is therefore essential to manage the amount of fermentable and unfermentable carbohydrates in the unfermented liquid to produce balanced fermented non-alcoholic plant-based beverages.

Irrespective of the approach, the final fermented non-alcoholic plant-based beverage typically contains rapidly digestible carbohydrates such as mono- and disaccharides and/or dextrins or other oligosaccharides to improve taste and mouthfeel and contrast acidity and/or bitterness and/or astringency. Consequently, the beverages have a high Glycemic index and are not suited for people with impaired postprandial blood sugar regulation or diabetes.

In non-alcoholic beer, the use of rapidly digestible carbohydrates is used to emulate the texture, flavor and aroma enhancing properties of ethanol. Bittering compounds from hops such as iso-alpha acids are perceived as more pleasant when combined with ethanol. Aroma active compounds such as terpenes, thiols, aldehydes, and esters are intensified in the combination with ethanol. To replace the texture, flavor and aroma enhancing properties of ethanol in non-alcoholic beer, the use of rapidly digestible carbohydrates is widely employed to contrast bitterness and improve overall flavor and aroma intensity.

In non-alcoholic wine or sparkling wines, the use of rapidly digestible carbohydrates is used to emulate texture, flavor and aroma enhancing properties of ethanol. Especially the mouthfeel, aroma intensifying and acidity contrasting properties of ethanol are sought to be replaced by rapidly digestible carbohydrates. The relatively high concentration of organic acids in non-alcoholic wine needs to be balanced with slightly sweet rapidly digestible carbohydrates to deliver a tangy experience.

More recently, several approaches have been undertaken to reduce the content of rapidly digestible carbohydrates in fermented non-alcoholic plant-based beverages. A promising approach is the use of dietary fibers to emulate the sensory effect of rapidly digestible carbohydrates. To substitute the sensory impact of rapidly digestible carbohydrates their biochemical properties have to be mimicked. Dietary fibers with good solubility and low viscosity contribution are required to sensorially surrogate rapidly digestible carbohydrates. These are hard to find since dietary fibers are typically poorly soluble or if soluble, increase the viscosity of the beverage at very low concentrations due to the high molecular weight. Furthermore, highly soluble and low viscosity contributing dietary fibers such as resistant starches and dextrins typically contain 5-10 wt% mono- and disaccharides limiting their use in beverages that target low Glycemic index.

The production of fermented non-alcoholic plant-based beverages includes a processing step which involves the solubilization of fermentable carbohydrates and/or degradation of unfermentable carbohydrates into fermentable carbohydrates from the plant-based educt material. In the process of this solubilization and/or degradation of unfermentable carbohydrates into fermentable carbohydrates, digestible but unfermentable carbohydrates are formed. Depending on the ability of the microorganism to degrade carbohydrates, such digestible but unfermentable carbohydrates are maltose, maltotriose or any other carbohydrate that is not fermented by the microorganism but digested by humans. Depending on the degree of polymerisation (DP) of the unfermentable but digestible carbohydrates, they are considered rapidly digestible carbohydrates. The DP defines the sensory properties and Glycemic index of the respective carbohydrate species. Typically, the higher the DP, the less sweetness is perceived and the lower the Glycemic response. Generally, carbohydrate species with a Glycemic index above 70-80 are considered rapidly digestible. Consequently, beverages without mono- and disaccharides that are labelled as "sugar free" might still have a high Glycemic index and sweet taste.

Methods to produce non-alcoholic plant-based beverages that do not contain rapidly digestible carbohydrates while still providing the same satisfactory sensory properties as their alcoholic counterparts or their non-alcoholic and rapidly digestible carbohydrate-containing counterparts is therefore still a big unresolved challenge. The method and composition presented hereby solve these challenges.

### Summary of Invention

Described herein are various embodiments of methods for preparing a beverage using plant-derived material to provide a liquid essentially devoid of rapidly digestible unfermentable carbohydrates while providing fermentable carbohydrates, introducing slowly digestible compounds that are not degraded during fermentation to the liquid yielding the unfermented beverage, combining the unfermented beverage with at least one microorganism and fermenting the beverage to create the fermented non-alcoholic plant-based beverage. In some embodiments, the fermentable carbohydrates are fermented by the at least one microorganism into metabolites that are no longer rapidly digestible. In other embodiments, the fermentable carbohydrates are fermented by the at least one microorganism into biomass that is no longer rapidly digestible.

The inventors discovered that plant-derived material comprising carbohydrates could be combined with water to extract fermentable carbohydrates and slowly digestible compounds without extracting a significant amount of rapidly digestible carbohydrates that are not degraded during fermentation. In comparable applications of non-alcoholic beverages, the extraction of rapidly digestible carbohydrates that are not degraded during fermentation is desired due to their beneficial organoleptic properties such as enhanced mouthfeel, improved body or better head retention.

The inventors discovered that specific slowly digestible compounds are mimicking the organoleptic properties of rapidly digestible carbohydrates that are not degraded during fermentation. The inventors found that the slowly digestible compounds were not degraded during fermentation. The absence of rapidly digestible carbohydrates that are not degraded during fermentation and the use of the slowly digestible compounds that are not degraded during fermentation ensure a Glycemic index of the fermented non-alcoholic plant-based beverage below 70 while providing organoleptic properties substantially similar to an equivalent beverage having a Glycemic index above 70.

In general, the advantages for the food product can be of various kinds. Some nonlimiting examples include that a non-alcoholic beverage with substantially similar organoleptic properties to an alcoholic beverage offers the same indulgence without the adverse effects associated with alcohol consumption, a low Glycemic index is especially advantageous for consumers with impaired postprandial blood sugar regulation or diabetes or any health-conscious consumer seeking not to be exposed to high blood sugar levels and the associated risk of suffering from diabetes. In addition, the absence of rapidly digestible carbohydrates that are not degraded during fermentation reduces the caloric energy content of the food making it more appealing to consumers looking to minimize their caloric energy intake. Another advantage of this invention is the beneficial effects of the slowly digestible compounds on digestion. The poor digestion in the small intestine results in the passage of the slowly digestible compounds into the colon where they act as prebiotic. Prebiotics are known to have a positive effect on digestion and contribute to a healthy diet.

Another advantage of the method is the metabolization of mono- and disaccharides by the at least one microorganism into compounds or biomass that are no longer rapidly digestible resulting in a product that can be promoted as sugar free.

Another advantage of the method is the reduction of unpleasant tastes and aromas in the food product originating from the plant-derived material such as aldehydes, esters or higher alcohols. These are effectively degraded by the metabolic activity of the at least one microorganism during fermentation thereby yielding a more pleasant tasting and aromatic food product.

Another advantage of the method is the generation of pleasant tastes and aromas in the food product through the metabolic activity of the at least one microorganism contributing to the characteristic taste and aroma of fermented beverages such as beer, wine, cider and sparkling wine amongst others.

Another advantage of the method is the inhibition of pathogens through the metabolites produced by the at least one microorganism during fermentation such as organic acids or antimicrobial proteins.

The final food product produced by the method is a fermented beverage from plant-based ingredients, wherein the fermented beverage has a better taste and lower Glycemic index than the unfermented beverage and is more nutritious and better digestible.

The present invention thus discloses a method to prepare a food product, said method comprising the steps of: (a) providing a liquid from plant-derived material comprising digestible carbohydrates that are degraded during fermentation and being essentially devoid of rapidly digestible carbohydrates that are not degraded during fermentation (b) introducing slowly digestible compounds that are not degraded during fermentation to the liquid creating the unfermented beverage (c) adding at least one microorganism to the unfermented beverage creating the inoculated unfermented beverage (d) fermenting the unfermented beverage creating the fermented non-alcoholic plant-based beverage.

### Brief Description of Drawings

FIG.1 is a flow diagram illustrating a method to provide a fermented non-alcoholic plant-based beverage according to various embodiments described herein.
FIG.2 is a flow diagram illustrating another embodiment to provide a fermented non-alcoholic plant-based beverage according to various embodiments described herein.
FIG.3 is a flow diagram illustrating another embodiment to provide a fermented non-alcoholic plant-based beverage according to various embodiments described herein.
FIG.4 is a flow diagram illustrating another embodiment to provide a fermented non-alcoholic plant-based beverage according to various embodiments described herein.
FIG.5 is a flow diagram illustrating another embodiment to provide a fermented non-alcoholic plant-based beverage according to various embodiments described herein.
FIG.6 is a flow diagram illustrating another embodiment to provide a fermented non-alcoholic plant-based beverage according to various embodiments described herein.
FIG.7 illustrates the blood sugar response over time and resulting incremental area under the curve (IAUC) from intake of a beverage according to the present invention with a total carbohydrate content of 20 g carbohydrates, and a commercial non-alcoholic beer with a total carbohydrate content of 21 g carbohydrates.
FIG.8 illustrates the blood sugar response over time and resulting incremental area under the curve (IAUC) from intake of a beverage according to the present invention with 25 g carbohydrates and a glucose reference with a total carbohydrate content of 25 g.
FIG.9 illustrates the perceived bitterness from tasting the non-alcoholic plant-based beverage according to the present invention, comparing different concentrations of slowly digestible compounds, glucose, and a reference sample.
FIG.10 illustrates the perceived mouthfeel from tasting the non-alcoholic plant-based beverage according to the present invention, comparing different concentrations of slowly digestible compounds, glucose, and a reference sample.

### Description of Embodiments

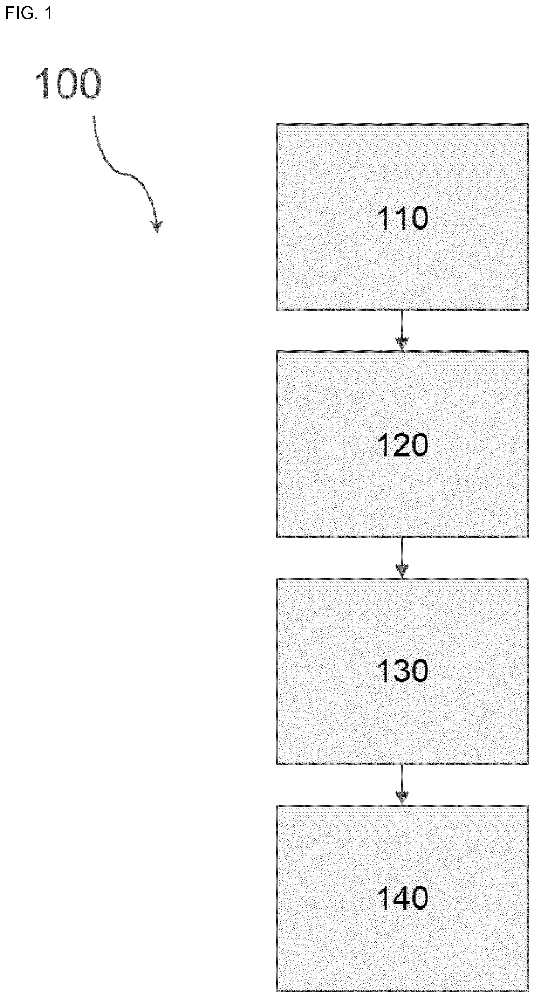

FIG. 1 presents a method 100 for preparing a fermented non-alcoholic plant-based beverage according to embodiments comprising the steps of providing 110 a liquid from plant-derived material comprising carbohydrates that are degraded during fermentation and being essentially devoid of rapidly digestible carbohydrates that are not degraded during fermentation, introducing 120 slowly digestible compounds that are not degraded during fermentation to the liquid thereby creating the unfermented beverage, combining 130 the unfermented beverage with at least one microorganism creating the inoculated unfermented beverage, and fermenting 140 the unfermented beverage creating the fermented non-alcoholic plant-based beverage which exhibits a Glycemic index below 70, preferably below 60, more preferably below 55 and having organoleptic properties substantially similar to an equivalent beverage having a Glycemic index above 70.

In accordance with the present invention the term "introducing" includes but is not limited to the addition of isolated compounds as well as the release, extraction, or concentration of such compounds from plant-based materials during processing.

In accordance with the present invention, the term "organoleptic" includes but is not limited to visual, olfactory, gustatory, tactile, and auditory aspects of food. Especially the perceived taste i.e. sweetness, bitterness, mouthfeel, and acidity as well as the presence or absence of aroma active compounds is subject of the present invention.

In accordance with the present invention, the term "microorganism" encompasses various types of at least one microorganism, including but not limited to bacteria, fungi, algae, molds, yeast and/or mushrooms.

In accordance with the present invention, the term "carbohydrate" herein defines organic compounds from carbon, hydrogen, and oxygen.

In accordance with the present invention, the term "fermentation" herein refers to the transformation of compounds by at least one microorganism.

Glycemic index (GI) herein defines the incremental area under the blood glucose response curve (IAUC) for the test compound calculated to a reference compound:$GI = 100 \times \left(IAUC_testcompound/IAUC_reference\right)$where the total digestible carbohydrate content of the ingested portion of test compound and reference compound are identical as measured by the sum of AOAC 996.11 or equivalent methods for total starches including maltodextrin and AOAC 2018.16 or equivalent methods for mono- and disaccharides.

"Digestible" herein defines the ability of the human gastrointestinal tract to break down and absorb or directly absorb a compound or its derivatives as glucose into the bloodstream. The total digestible carbohydrate content is quantified by the sum of AOAC 996.11 or equivalent methods for total starches including maltodextrin and AOAC 2018.16 or equivalent methods for mono- and disaccharides.

"Rapidly digestible" herein defines the ability of the human gastrointestinal tract to enzymatically convert the compound into glucose by the enzymes present in the saliva or small intestine or absorb the compound directly from the small intestine into the bloodstream leading to a Glycemic index of the compound being greater than 80 and thus a rapid increase in blood glucose levels. For carbohydrates, the method described by Englyst et al., Food Chem., 245:1183-1189, 2018 allows to quantify rapidly digestible carbohydrates *in vitro.* Rapidly digestible carbohydrates are determined by enzymatically digesting a food sample under simulated physiological conditions and measuring the amount of glucose released within the first 20 minutes of incubation. This fraction represents the carbohydrate portion that is rapidly hydrolyzed and absorbed in the small intestine shortly after consumption.

"Slowly digestible" herein defines the inability of the human gastrointestinal tract to enzymatically convert the compound into glucose by the enzymes present in the saliva or small intestine or absorb the compound or its derivatives directly from the small intestine into the bloodstream leading to a Glycemic index of the compound being lower than 70 and thus a slow increase in blood glucose levels. For carbohydrates, the method described by Englyst et al., Food Chem., 245:1183-1189, 2018 allows to quantify slowly digestible carbohydrates *in vitro.* Slowly digestible carbohydrates are quantified as the additional glucose released between 20 and 120 minutes of enzymatic digestion. It reflects the carbohydrate fraction that is digested more gradually, contributing to a sustained glucose release over time. Dietary fibers are included in the term "slowly digestible" even though they are technically non digestible. Compounds other than carbohydrates such as proteins, polyphenols, alcohols, organic acids, lipids, and other minor compounds in food are typically slowly digestible.

For proteins content determination the AOAC 960.52 method is used.

For polyphenol content determination the Folin-Ciocalteu method is used: A sample of the beverage is prepared by appropriate dilution and filtration to remove particulates. An aliquot of the prepared sample is mixed with a defined volume of Folin-Ciocalteu reagent. After a specified incubation period, an alkaline solution is added to the reaction mixture to neutralize acidity and develop color. The reaction mixture is incubated at controlled temperature for a defined time to allow complete color development. The absorbance of the resulting blue complex is measured spectrophotometrically at approximately 765 nm against a reagent blank. Total polyphenol content is quantified by comparison to a standard calibration curve generated using a known polyphenol standard such as gallic acid, and results are expressed as gallic acid equivalents (GAE).

Dietary fiber herein defines a carbohydrate with a degree of polymerization (DP) not lower than 3 which are neither digested nor absorbed in the small intestine. They are quantified with AOAC 2017.16.

"Degraded during fermentation" herein defines the metabolization of compounds by microorganisms.

"Non-alcoholic" herein defines ethanol concentrations below 0.5 vol% in the final product. Ethanol content may be measured by density difference, distillation methods, chromatography methods or NIR methods.

The method 100 involves combining plant-derived material with water in a manner that avoids the extraction of rapidly digestible carbohydrates that are not degraded during fermentation. Instead, the method selectively extracts carbohydrates that are degraded during fermentation. Rapidly digestible carbohydrates that are not degraded during fermentation remain unextracted but slowly digestible compounds that are also not degraded during fermentation but possess organoleptic properties substantially similar to those of the rapidly digestible carbohydrates are introduced. The organoleptic properties include but are not limited to an improved mouthfeel and reduced bitterness perception compared to a reference not containing mentioned slowly digestible compounds, while maintaining a viscosity range of 1-10 mPa·s. Depending on the at least one microorganism used to ferment the liquid, different types of carbohydrates are degraded during fermentation into metabolites or accumulated as microorganism biomass. The ability of the at least one microorganism used to ferment digestible carbohydrates into metabolites or biomass that are no longer being rapidly digestible combined with the absence of rapidly digestible carbohydrates that are not degraded during fermentation is reflected in the low Glycemic index of the final food product.

The method 100 avoids the extraction of rapidly digestible carbohydrates that are not degraded during fermentation by any of the following methods or combinations thereof such as but not limited to combining plant-derived material with water under selected conditions, such as varying temperatures, pH levels, or salt concentrations, selecting plant-derived material that does not comprise rapidly digestible carbohydrates that are not degraded during fermentation, enzymatically convert rapidly digestible carbohydrates that are not degraded during fermentation into rapidly digestible carbohydrates that are degraded during fermentation.

The method 100 introduces slowly digestible compounds that are not degraded during fermentation but possess organoleptic properties substantially similar to those of the rapidly digestible carbohydrates. Such slowly digestible compounds can be from any of the following compound class or combination thereof but not limited to dietary fibers, proteins, polyphenols, protein-polyphenol complexes, sugar alcohols, glycerol, organic acids, allulose, tagatose, trehalose, maltulose, isomaltulose, monk fruit, glycyrrhizin, thaumatin, or oligosaccharides.

The step of 110 providing the liquid can be conducted with any of the following methods to separate solids and liquids such as but not limited to gravity filtration, lautering, sieving, vacuum filtration, pressure filtration, membrane filtration, centrifugal filtration, decantation and settling, coagulation and flocculation, crossflow filtration, rotary drum filters or any other method.

The absence of rapidly digestible carbohydrates that are not degraded during fermentation can be measured by high-performance liquid chromatography to determine the individual carbohydrate species and allocate their respective Glycemic from literature values. For a microorganism or a combination of microorganisms that ferment glucose and fructose but no higher polymerised carbohydrate, the content of rapidly digestible carbohydrates that are not degraded during fermentation is the sum of all carbohydrates other than glucose and fructose with a Glycemic index >80. For a microorganism or a combination of microorganisms that ferment glucose, fructose, saccharose, and maltose the content of rapidly digestible carbohydrates that are not degraded during fermentation is the sum of all carbohydrates other than glucose, fructose, saccharose, and maltose with a Glycemic index >80.

In some embodiments the liquid is provided by combining the plant-derived material comprising any of the following, but not limited to such materials as entire kernels, seeds, beans, meals, cakes, germ-, gluten-, malt sprout-, middling-, bran-, hominy feed-, and dust fractions, roots, tubers, rhizomes, gum exudates, fruits, pulp, leaf petioles, bark, resin, latex, inflorescences, sap, stem, juice, skin, peels and purees of wheat (*Triticum aestivum, Triticum durum, Triticum spelta, Triticum monococcum, Triticum dicoccon,* ×*Triticosecale*), barley (*Hordeum spp.*)*,* oat (*Avena spp.*)*,* corn (*Zea mays*)*,* sorghum (*Sorghum spp.*)*,* rice (*Oryza spp*.)*,* rye (*Secale cereale*)*,* millet (*Panicum spp., Setaria spp., Eleusine spp., Pennisetum spp*.)*,* adlay millet (*Coix* l*acryma-jobi*), teff (*Eragrostis tef*), fonio (*Digitaria exilis, Digitaria iburua*), buckwheat (*Fagopyrum spp*.)*,* quinoa (*Chenopodium quinoa*)*,* chia (*Salvia hispanica*)*,* kañiwa (*Chenopodium pallidicaule*)*,* amaranth (*Amaranthus spp.*), flax (*Linum usitatissimum*)*,* perilla (*Perilla frutescens*)*,* psyllium (*Plantago spp.*)*,* camelina (*Camelina sativa*)*,* hemp (*Cannabis sativa*)*,* moringa (*Moringa oleifera*)*,* sunflower (*Helianthus annuus*)*,* cotton (*Gossypium spp.*), sesame (*Sesamum indicum*)*,* peanut (*Arachis hypogaea*), rape (*Brassica napus, Brassica rapa*)*,* pumpkin (*Cucurbita spp.*)*,* soybean (*Glycine max*)*,* safflower (*Carthamus tinctorius*)*,* lentils (*Lens culinaris*)*,* beans (*Phaseolus spp., Vigna spp.*)*,* peas (*Pisum spp.*)*,* chickpea (*Cicer spp.*), mustard (*Brassica spp.),* lupins (*Lupinus spp.*), alfalfa (*Medicago sativa*)*,* pigeon pea (Cajanus spp.), fava bean (Vicia faba), chicory (*Cichorium intybus*)*,* dandelion (*Taraxacum officinale*)*,* burdock (*Arctium lappa*)*,* agave (*Agave spp.*)*,* jerusalem artichoke (*Helianthus tuberosus*)*,* yacon (*Smallanthus sonchifolius*)*,* acacia gum (*Gum Arabic*) *(Acacia senegal* / *Acacia seyal*), apple *(Malus domestica*)*,* pear (*Pyrus communis*)*,* quince (*Cydonia oblonga*)*,* rhubarb (*Rheum rhabarbarum*)*,* avocado (*Persea americana*)*,* coconut (*Cocos nucifera*)*,* blackberry (*Rubus fruticosus*)*,* raspberry (*Rubus idaeus*)*,* strawberry (*Fragaria* × *ananassa*)*,* bamboo (*Bambusoideae*)*,* oak (*Quercus spp*.)*,* birch (*Betula pendula, Betula pubescens*)*,* beech (*Fagus spp.*)*,* artichoke (*Cynara cardunculus var. scolymus*)*,* citrus (*Citrus spp.*)*,* konjac (*Amorphophallus konjac*)*,* kelp (*Laminaria spp.*)*,* guar *(Cyamopsis tetragonoloba*)*,* banana (*Musa spp.*)*,* potato (*Solanum tuberosum*)*,* plantain (*Musa paradisiaca*)*,* grape (*Vitis vinifera*)*,* mango (*Mangifera indica*)*,* papaya (*Carica papaya*)*,* guava (*Psidium guajava*)*,* passion fruit (*Passiflora edulis*)*,* pomegranate (*Punica granatum*)*,* physalis (*Physalis spp.*)*,* coffee (Coffea *spp.),* cacao (*Theobroma cacao*), hibiscus (*Hibiscus sabdariffa*)*,* tiger nut (Cyperus esculentus), carrot (*Daucus carota*)*,* beetroot (*Beta vulgaris*)*,* sugar beet (*Beta vulgaris subsp. vulgaris*)*,* parsnip (*Pastinaca sativa*) in their unmalted, malted, or germinated form with water to extract carbohydrates that are degraded during fermentation while not extracting carbohydrates that are rapidly digestible and not degraded during fermentation.

In some embodiments the liquid is provided by extracting directly the liquid from the plant-derived material.

In some embodiments the liquid is provided by extracting the liquid directly from unripe plant-derived material.

In some embodiments the liquid is provided by combining the plant-derived material with water at a temperature below the solubilization of rapidly digestible carbohydrates that are not degraded during fermentation.

In some embodiments the liquid is provided by combining the plant-derived material with water at a temperature below 50 °C.

In some embodiments the liquid is provided by combining the plant-derived material comprising any of the following, but not limited to such materials as cereal germs with water at a temperature below 50 °C.

In some embodiments the liquid is provided by combining the plant-derived material comprising any of the following, but not limited to such materials as germinated seeds, beans or kernels with water at a temperature below 50 °C.

In some embodiments the liquid is provided by combining the plant-derived material comprising either entire seeds, beans, kernels or a combination thereof with water at a temperature below 50 °C, allowing these seeds, beans or kernels to germinate, crushing these seeds, beans or kernels to extract carbohydrates that are degraded during fermentation.

In some embodiments the liquid is provided by combining the plant-derived material comprising either cereal germs, malted cereals and unmalted cereals or a combination thereof at a temperature below 50 °C to allow the endogenous proteases of the malt to increase protein solubility.

In some embodiments the liquid is provided by combining the plant-derived material comprising either cereal germs, malt-sprouts, germinated legumes, malted cereals and unmalted cereals or a combination thereof at a temperature below 50 °C to allow the endogenous proteases of the malt to increase protein solubility.

In one embodiment, the liquid is provided by combining plant-derived material comprising either unmalted cereals, malted cereals, germinated plant-derived material, and cereal germs or a combination thereof with water at a temperature of 75 °C thereby creating less than 7.7 g/L glucose and fructose if added together and less than 10 g/L of rapidly digestible carbohydrates that are not degraded during fermentation, introducing slowly digestible compounds to the liquid and inoculating the unfermented beverage with at least one maltose-negative microorganism to ferment the unfermented beverage thereby creating the fermented non-alcoholic plant-based beverage.

In one embodiment, the liquid is provided by combining plant-derived material comprising either unmalted cereals, malted cereals, germinated plant-derived material, and cereal germs or a combination thereof with water at a temperature of 45 °C thereby creating less than 7.7 g/L glucose and fructose if added together and less than 10 g/L of rapidly digestible carbohydrates that are not degraded during fermentation, introducing slowly digestible compounds to the liquid and inoculating the unfermented beverage with at least one maltose-negative microorganism to ferment the unfermented beverage thereby creating the fermented non-alcoholic plant-based beverage.

In one embodiment, the liquid is provided by combining plant-derived material comprising either unmalted cereals, malted cereals, germinated plant-derived material, and cereal germs or a combination thereof with water at a temperature of 5 °C thereby creating less than 7.7 g/L glucose and fructose if added together and less than 10 g/L of rapidly digestible carbohydrates that are not degraded during fermentation, introducing slowly digestible compounds to the liquid and inoculating the unfermented beverage with at least one maltose-negative microorganism to ferment the unfermented beverage thereby creating the fermented non-alcoholic plant-based beverage.

In one embodiment, the liquid is provided by combining plant-derived material comprising either unmalted cereals, malted cereals, germinated plant-derived material, and cereal germs or a combination thereof with water at a temperature of 45 °C thereby creating less than 7.7 g/L glucose and fructose if added together and less than 10 g/L of rapidly digestible carbohydrates that are not degraded during fermentation, introducing slowly digestible compounds to the liquid and inoculating the unfermented beverage with at least one crab-tree negative microorganisms to ferment the unfermented beverage thereby creating the fermented non-alcoholic plant-based beverage.

In some embodiments the liquid is provided by combining the plant-derived material with water at a temperature above the inactivation temperature of enzymes that convert carbohydrates into rapidly digestible carbohydrates that are not degraded during fermentation.

In some embodiments the liquid is provided by combining the plant-derived material with water at a temperature above 74 °C.

In some embodiments the liquid is provided by combining the plant-derived material comprising any of the following, but not limited to such materials as cereal malt with water at a temperature above 74 °C.

In some embodiments the liquid is provided by combining the plant-derived material comprising any of the following, but not limited to such materials as unmalted and malted cereals with water at a temperature above 74 °C.

In some embodiments the liquid is provided by combining the plant-derived material comprising any of the following, but not limited to such materials as cereal germs with water at a temperature above 74 °C.

In some embodiments the liquid is provided by combining the plant-derived material comprising any of the following, but not limited to such materials as germinated seeds, beans, or kernels with water at a temperature above 74 °C.

In one embodiment, the liquid is provided by combining the plant derived material comprising either unmalted and malted cereals or a combination thereof with water at a temperature of 76 °C thereby creating less than 7.7 g/L glucose and fructose if added together and less than 10 g/L of rapidly digestible carbohydrates that are not degraded during fermentation, introducing slowly digestible compounds to the liquid and inoculating the unfermented beverage with at least one maltose-negative microorganism to ferment the unfermented beverage thereby creating the fermented non-alcoholic plant-based beverage.

In another embodiment, the liquid is provided by combining either unmalted and malted cereals or a combination thereof with water at a temperature of 76 °C thereby creating less than 7.3 g/L glucose, fructose, and maltose if added together and less than 20 g/L of rapidly digestible carbohydrates that are not degraded during fermentation, introducing slowly digestible compounds to the liquid and inoculating the unfermented beverage with at least one maltotriose-negative microorganism to ferment the unfermented beverage thereby creating the fermented non-alcoholic plant-based beverage.

In another embodiment, the liquid is provided by combining either unmalted and malted cereals or a combination thereof with water at a temperature of 76 °C thereby creating less than 20 g/L glucose and fructose if added together and less than 10 g/L of rapidly digestible carbohydrates that are not degraded during fermentation, introducing slowly digestible compounds to the liquid and inoculating the unfermented beverage with at least one crab-tree negative and maltose-negative microorganism under the addition of oxygen to ferment the unfermented beverage thereby creating the fermented non-alcoholic plant-based beverage.

In another embodiment, the liquid is provided by combining either unmalted and malted cereals or a combination thereof with water at a temperature of 76 °C thereby creating less than 20 g/L glucose, fructose if added together, less than 7.3 g/L maltose and less than 10 g/L of rapidly digestible carbohydrates that are not degraded during fermentation, introducing slowly digestible compounds and inoculating the unfermented beverage with at least one crab-tree negative and maltose-negative microorganism to ferment the glucose and fructose under the addition of oxygen into biomass before inoculating at least one maltotriose-negative microorganism to ferment the residual maltose thereby creating the fermented non-alcoholic plant-based beverage.

In step of introducing 120 slowly digestible compounds that are not degraded during fermentation to the liquid, the slowly digestible compounds show a Glycemic index below 70 and are soluble in the liquid. The degradation during fermentation is assessed for the at least one microorganism that is added to the liquid. Degradation during fermentation occurs if the slowly digestible compounds are transformed or broken down during fermentation with the at least one microorganism.

In some embodiments the slowly digestible compounds contain traces of rapidly digestible carbohydrates that are degraded during fermentation.

In some embodiments the slowly digestible compounds that are not degraded during fermentation encompass various types, including but not limited to resistant starches, resistant dextrins, cluster dextrin, isomaltulose, isomalto-oligosaccharides, resistant maltodextrin, polydextrose, inulin, fructooligosaccharides, glucans, partially hydrolyzed guar gum, acacia gum, hydrolyzed pectin, hydrolyzed cellulose, low molecular weight beta-glucans, enzymatically hydrolyzed pectin, raffinose, raffinose oligosaccharides, sugar alcohols (e.g. glycerine, erythritol, xylitol, sorbitol, mannitol, maltitol, isomalt and hydrogenated starch hydrolysates) and organic acids (e.g. succinic acid, citric acid, lactic acid, acetic acid, and malic acid).

In some embodiments, slowly digestible compounds are introduced by directly adding a purified or isolated form including but not limited to powders, crystalline forms, granules, pellets, beads, microparticles, tablets, lyophilized forms, encapsulates, aqueous solutions, aqueous suspensions, concentrated liquids, liquid extracts, emulsions, solutions in organic solvent, lipid-based solutions, hydrogels, pastes, gums and soft capsules.

In a preferred embodiment the slowly digestible compounds show a degree of polymerisation between 1-5000, more preferably 3-1000, even more preferably 3-100.

In some embodiments the slowly digestible compounds that are not degraded during fermentation are formed by the addition of polyphenols to the liquid to form particles comprising but not limited to proteins and polyphenols.

In some embodiments the slowly digestible compounds that are not degraded during fermentation are comprising but not limited to a combination of resistant starches, resistant dextrins, cluster dextrin, isomaltulose, isomalto-oligosaccharides, resistant maltodextrin, polydextrose, inulin, fructooligosaccharides, glucans, partially hydrolyzed guar gum, acacia gum, hydrolyzed pectin, hydrolyzed cellulose, low molecular weight beta-glucans, enzymatically hydrolyzed pectin, raffinose, raffinose oligosaccharides, sugar alcohols (e.g. glycerine, erythritol, xylitol, sorbitol, mannitol, maltitol, isomalt andhydrogenated starch hydrolysates), organic acids (e.g. succinic acid, citric acid, lactic acid, acetic acid, and malic acid) and polyphenols, including polyphenol-protein complexes.

In a preferred embodiment, the slowly digestible compounds belonging to the class of carbohydrates are stabilizing the protein-polyphenol complexes by increasing the viscosity of the matrix.

In some embodiments the slowly digestible compounds that are not degraded during fermentation are formed by the addition of materials including but not limited to polyphenols from leaves, needles, skin, peel, bark, supercritical CO₂ and other extracts, seeds, polyphenol-, tannin-, oil fractions of green tea (*Camellia sinensis*)*,* cocoa (*Theobroma* cacao), grapes (*Vitis vinifera*)*,* pomegranate (*Punica granatum*)*,* coffee (*Coffea spp.*)*,* cinnamon (*Cinnamomum verum*)*,* hop (*Humulus lupulus*), citrus fruits (*Citrus spp.*)*,* eucalyptus (*Eucalyptus spp.*)*,* fir trees (*Abies spp.*)*,* apples (*Malus spp.*)*,* pear (*Pyrus spp.*)*,* cherries (*Prunus spp.*)*,* plum (*Prunus spp.*)*,* peach *(Prunus spp.),* apricot (*Prunus spp.*)*,* quince (*Cydonia oblonga),* currants (*Ribes spp.*)*,* gooseberries (*Ribes spp.*)*,* raspberry (*Rubus idaeus*)*,* blackberry *(Rubus fruticosus*)*,* blueberry (*Vaccinium spp.*)*,* bilberry (*Vaccinium myrtillus*)*,* cranberry (*Vaccinium spp.*), elderberry (*Sambucus spp.*)*,* aronia berry (*Aronia melanocarpa*)*,* sea buckthorn (*Hippophae rhamnoides),* acai berry (*Euterpe oleracea),* goji berry (*Lycium barbarum*)*,* oak (*Quercus spp.*)*,* chestnut (*Castanea sativa*)*,* walnut (*Juglans spp.*)*,* birch *(Betula spp*.)*,* beech (*Fagus sylvatica*)*,* willow (S*alix alba*)*,* maple (*Acer spp*.) and their formation of particles comprising protein and polyphenols.

In some embodiments the slowly digestible compounds that are not degraded during fermentation are formed by the addition of polyphenols from hops to the liquid to form particles comprising but not limited to protein and polyphenols.

In one embodiment the slowly digestible compounds that are not degraded during fermentation are formed by the addition of polyphenols from hops, preferably flavan-3-ols, flavanols, and tannins to the liquid to form particles comprising but not limited to protein and polyphenols.

In another embodiment the slowly digestible compounds that are not degraded during fermentation are introduced by the addition of soluble resistant dextrins in powder form.

In another embodiment the slowly digestible compounds that are not degraded during fermentation are introduced by the addition of cluster dextrin in an aqueous solution.

In another embodiment the slowly digestible compounds that are not degraded during fermentation are introduced by the addition of polyols in a crystalline form.

In another embodiment the slowly digestible compounds that are not degraded during fermentation are introduced by the addition of organic acids in a concentrated liquid.

In some embodiments the slowly digestible compounds are introduced before fermentation.

In some embodiments, the slowly digestible compounds that are not degraded during fermentation are introduced by extraction of plant-based material during processing including but not limited to mechanical disruption, thermal treatment, enzymatic treatment or microbial fermentation.

In some embodiments, the slowly digestible compounds that are not degraded during fermentation are introduced by extraction of plant-based material including but not limited to such materials as entire kernels, seeds, beans, meals, cakes, germ-, gluten-, malt sprout-, middling-, bran-, hominy feed-, and dust fractions, roots, tubers, rhizomes, gum exudates, fruits, pulp, leaf petioles, bark, resin, latex, inflorescences, sap, stem, juice, skin, peels and purees of wheat (*Triticum aestivum, Triticum durum, Triticum spelta, Triticum monococcum, Triticum dicoccon,* ×*Triticosecale*), barley (*Hordeum spp*.)*,* oat (*Avena spp.*)*,* corn (*Zea mays*)*,* sorghum (*Sorghum spp.*)*,* rice *(Oryza spp*.)*,* rye *(Secale cereale),* millet (*Panicum spp., Setaria spp., Eleusine spp., Pennisetum spp.*)*,* adlay millet (*Coix lacryma-jobi*), teff (*Eragrostis tef*), fonio (*Digitaria exilis, Digitaria iburua*)*,* buckwheat (*Fagopyrum spp.*)*,* quinoa (*Chenopodium quinoa),* chia (*Salvia hispanica*)*,* kañiwa (*Chenopodium pallidicaule*)*,* amaranth (*Amaranthus spp.*)*,* flax (*Linum usitatissimum*)*,* psyllium (*Plantago spp*.)*,* hemp (*Cannabis sativa*)*,* moringa (*Moringa oleifera*)*,* sunflower (*Helianthus annuus*)*,* sesame (*Sesamum indicum*)*,* peanut (*Arachis hypogaea*)*,* pumpkin (*Cucurbita spp*.)*,* soybean (*Glycine max*)*,* safflower (*Carthamus tinctorius*)*,* lentils (*Lens culinaris*)*,* beans (*Phaseolus spp., Vigna spp.*), peas (*Pisum spp.*), chickpea (*Cicer spp*.)*,* lupins (*Lupinus spp.*)*,* alfalfa (*Medicago sativa*)*,* fava bean (Vicia faba), chicory (*Cichorium intybus*)*,* dandelion (*Taraxacum officinale*)*,* burdock (*Arctium lappa*)*,* agave (*Agave spp.*)*,* jerusalem artichoke (*Helianthus tuberosus*)*,* yacon (*Smallanthus sonchifolius*)*,* acacia gum (*Gum Arabic*) *(Acacia senegal* / *Acacia seyal*), apple *(Malus domestica),* pear (*Pyrus communis*)*,* quince (*Cydonia oblonga*)*,* rhubarb (*Rheum rhabarbarum*)*,* blackberry (*Rubus fruticosus*)*,* raspberry (*Rubus idaeus*)*,* strawberry (*Fragaria* × *ananassa),* artichoke (*Cynara cardunculus var. scolymus*)*,* citrus (*Citrus spp*.)*,* konjac (*Amorphophallus konjac*)*,* guar (*Cyamopsis tetragonoloba*)*,* banana (*Musa spp*.)*,* potato (*Solanum tuberosum*)*,* plantain (*Musa paradisiaca*), grape (*Vitis vinifera*), mango (*Mangifera indica*), papaya (*Carica papaya*), guava (*Psidium guajava*)*,* passion fruit (*Passiflora edulis*)*,* pomegranate (*Punica granatum*)*,* coffee (*Coffea spp.*)*,* cacao *(Theobroma cacao*), hibiscus (*Hibiscus sabdariffa*), tiger nut (Cyperus esculentus), carrot (*Daucus carota*)*,* beetroot (*Beta vulgaris*)*,* sugar beet (*Beta vulgaris subsp. vulgaris*)*,* parsnip (*Pastinaca sativa*) in their unmalted, malted, or germinated form.

In some embodiments, the slowly digestible compounds that are not degraded during fermentation are introduced by thermal extraction of inulin-rich roots in liquid at a temperature above 70 °C.

In another embodiment, the slowly digestible compounds that are not degraded during fermentation are introduced by thermal extraction of chicory roots in water at a temperature above 80 °C to release inulin and fructooligosaccharides.

In another embodiments, the slowly digestible compounds that are not degraded during fermentation are introduced by thermal extraction of Jerusalem artichoke at a temperature above 75 °C to release inulin and fructooligosaccharides.

In some embodiments, a combination of approaches is used.

The step of combining 130 the unfermented beverage with at least one microorganism can be done by adding microorganisms in dry or liquid form to the unfermented beverage. Dry forms include but are not limited to lyophilized forms of the microorganism in combination with surfactants and/or nutrients. Liquid forms include but are not limited to agar plates, slant agar, live microorganisms in sterile nutrient solution, microorganism slurries from previous fermentations, or immobilized microorganisms on beads or gels. The microorganisms are cultured first in a starter media to reach sufficient colony forming units (CFU) per millilitre (ml) such that the final pitch rate with the liquid yields sufficient CFU/ml to perform the fermentation. Colony forming units (CFU) refer to the number of microbial cells that are viable and able to multiply.

In some embodiments the unfermented beverage is combined with at least one microorganism to yield between 10³ - 10⁹ CFU/ml, preferably 10⁴ - 10⁸ CFU/ml, more preferably 10⁵ - 10⁷ CFU/ml.

In some embodiments the unfermented beverage is combined with at least one microorganism in a successive step with another microorganism.

In some embodiments the unfermented beverage is combined with at least one microorganism comprising the genus *Saccharomyces* and preferably *Saccharomyces cerevisiae, Saccharomyces pastorianus*, *Saccharomyces eubayanus, Saccharomyces bayanus, Saccharomyces uvarum* and *Saccharomyces ludwigii.*

In some embodiments the unfermented beverage is combined with at least one microorganism comprising the genus *Brettanomyces, Oenococcus, Pediococcus, Lactococcus,* and *Lactobacillus.*

In some embodiments the unfermented beverage is combined with at least one microorganism comprising the genus *Hanseniaspora* preferably *Hanseniaspora uvarum.*

In some embodiments the unfermented beverage is combined with at least one microorganism comprising the genus *Kluyveromyces* preferably *Kluyveromyces lactis* and *Kluyveromyces marxianus*

In some embodiments the unfermented beverage is combined with at least one microorganism comprising the genus *Pichia* preferably *Pichia kudriazvevii* and *Pichia kluyveri.*

In some embodiments the unfermented beverage is combined with at least one microorganism comprising the genus *Yarrowia* preferably *Yarrowia lipolytica.*

In some embodiments the unfermented beverage is combined with at least one microorganism comprising the genus *Debaryomces* preferably *Debaryomyces hansenii.*

In some embodiments the unfermented beverage is combined with at least one microorganism comprising the genus *Lachnacea* preferably *Lachnacea thermotolerans, Lachnacea fermentati,* and *Lachnacea kluyveri.*

In some embodiments the unfermented beverage is combined with at least one microorganism comprising the genus *Metschnikowia* preferably *Metschnikowia fructicola* and *Metschnikowia pulcherrima.*

In some embodiments the unfermented beverage is combined with at least one microorganism comprising the genus *Torulaspora* preferably *Torulaspora delbrueckii.*

In some embodiments the unfermented beverage is combined with at least one microorganism comprising the genus *Blastobotrys* preferably *Blastobotrys elegans.*

In some embodiments the unfermented beverage is combined with at least one microorganism comprising the genus *Cyberlindnera* preferably *Cyberlindnera saturnus* and *Cyberlindnera musmaiensis.*

The step of fermenting 140 the unfermented beverage creating the fermented non-alcoholic plant-based beverage can be done in batch or continuous mode under anaerobic or aerobic conditions. Aerobic herein refers to the deliberate introduction of oxygen during the fermentation. The fermentation can be carried out statically or through continuous movement of the liquid.

In some embodiments, fermenting the unfermented beverage creating the fermented non-alcoholic plant-based beverage occurs between 2-40 °C, more preferably 15-35 °C, even more preferably 20-25 °C.

In some embodiments, fermenting the unfermented beverage creating the fermented non-alcoholic plant-based beverage occurs between 10-40°C, more preferably 15-35 °C, even more preferably 20-25 °C for 24-96h, more preferably 48-72h.

In some embodiments, the fermentation is divided into a higher temperature part and a lower temperature part.

In some embodiments, the higher fermentation is between 10-40 °C, more preferably 15-35 °C, even more preferably 20-25 °C and the lower temperature between -5-10 °C, more preferably 0-10 °C.

In some embodiments the time required for the low temperature part of the fermentation exceeds 24h.

In some embodiments fermenting the unfermented beverage creating the fermented non-alcoholic plant-based beverage occurs under pressures exceeding the atmospheric pressure.

In some embodiments the fermented non-alcoholic plant-based beverage is filtered to separate suspended particles from the liquid.

In some embodiments the fermented non-alcoholic plant-based beverage is filled into a sealed container and subjected to a microbial inactivation step.

In some embodiments, flavors, aroma or other compounds are added to the fermented non-alcoholic plant-based beverage.

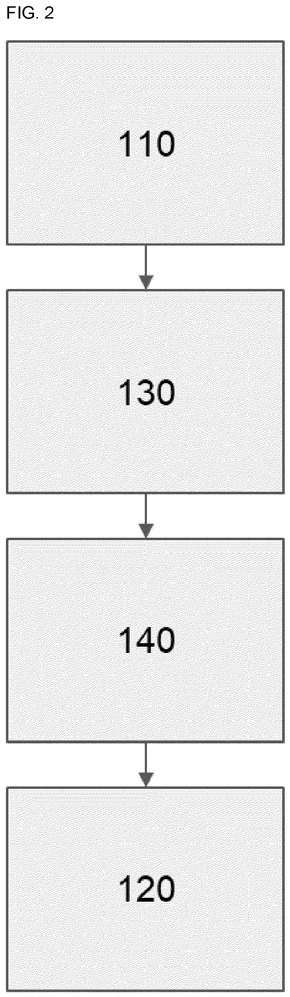

FIG. 2 presents another embodiment for preparing a fermented non-alcoholic plant-based beverage, comprising the steps of providing 110 a liquid, combining 130 the unfermented beverage with at least one microorganism, fermenting 140 the unfermented beverage, and combining 120 the fermented beverage with slowly digestible compounds creating the fermented non-alcoholic plant-based beverage.

In some embodiments the slowly digestible compounds are added after the fermentation to avoid degradation during fermentation.

In some embodiments the slowly digestible compounds are added after the fermentation at a temperature where fermentative activity is too low to degrade the slowly digestible compounds.

In some embodiments the slowly digestible compounds are added after the fermentation at a temperature where fermentative activity is too low to degrade the slowly digestible compounds and subsequently subject the fermented non-alcoholic plant-based beverage to a microbial inactivation step.

In some embodiments the slowly digestible compounds comprise fructose, trehalose, tagatose, isomaltulose.

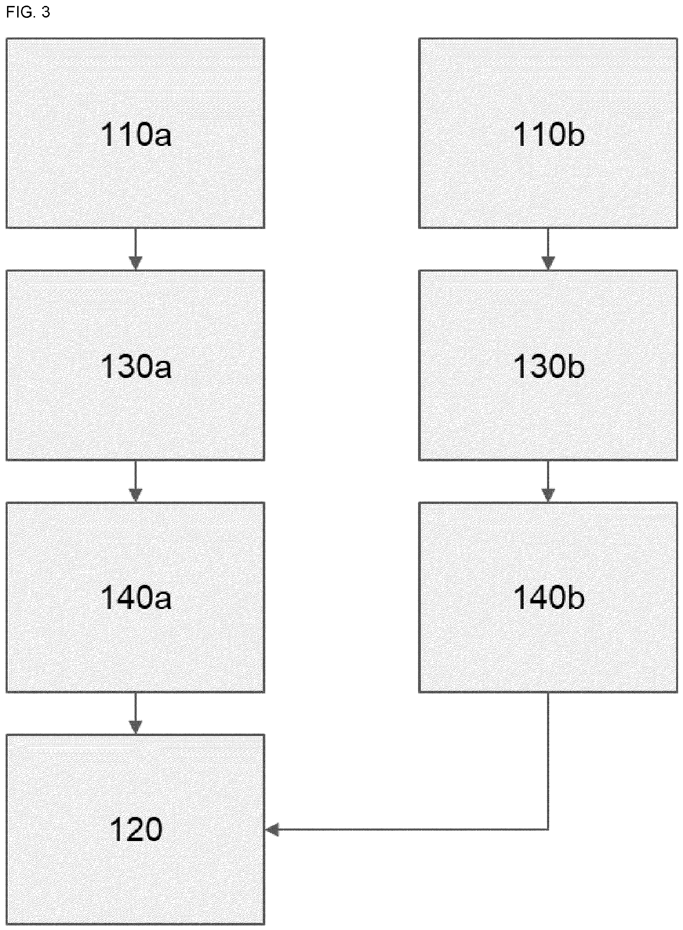

FIG. 3 presents another embodiment for preparing a fermented non-alcoholic plant-based beverage, comprising the steps of providing 110a a liquid 1, providing 110b a liquid 2, combining 130a liquid 1 with at least one microorganism, combining 130b liquid 2 with at least one microorganism, fermenting 140a liquid 1 to yield the fermented beverage, fermenting 140b liquid 2 to yield slowly digestible compounds, and combining 120 the fermented beverage with the slowly digestible compounds creating the fermented non-alcoholic plant-based beverage.

The providing 110b a liquid 2 can be done by combining plant-derived material with water, extracting digestible carbohydrates that are not degraded during fermentation, enzymatically converting the carbohydrates into a form that can be degraded during fermentation, and separating the liquid from the residual solid plant-derived material creating liquid 2. The separation can be conducted with any method to separate solids and liquids such as but not limited to gravity filtration, lautering, sieving, vacuum filtration, pressure filtration, membrane filtration, centrifugal filtration, decantation and settling, coagulation and flocculation, crossflow filtration, rotary drum filters or any other method.

In some embodiments the temperature at which the digestible carbohydrates are extracted is above their gelatinization temperature.

In some embodiments the temperature at which the digestible carbohydrates are extracted is between 60 and 74 °C.

In some embodiments the enzymatic conversion is done with endogenous enzymes of the plant-derived material.

In some embodiments the enzymatic conversion is done with endogenous amylases of the plant-derived material.

In some embodiments the enzymatic conversion is done with exogenous enzymes.

In some embodiments, the exogenous enzymes comprise alpha-amylase, beta-amylase, glucoamylase, alpha-glucosidase, maltase, isomaltase, isoamylase, pullulanase, oligo-1,6-glucosidase, neopullulanase, starch phosphorylase, maltogenic amylase, amylomaltase, xylanases, beta-glucanases, cellulases, hemicellulases, arabinofuranosidase, polygalacturonase, mannanase, feruloyl esterase, fructanase, and lichenase.

The combination 130b of liquid 2 with at least one microorganism is done analogously to step 130 of combining the liquid with at least one microorganism.

In some embodiments liquid 2 is combined with at least one microorganism comprising the genus *Leuconostoc,* preferably *Leuconostoc mesenteroides,* the genus *Streptococcus,* preferably *Streptococcus mutans, Streptococcus thermophilus,* the genus *Lactobacillus,* preferably *Lactobacillus reuteri, Lactobacillus rhamnosus* the genus *Bifidobacterium,* preferably *Bifidobacterium animalis,* the genus *bacillus,* preferably *Bacillus licheniformis, Bacillus subtilis,* the genus *Trichoderma,* preferably *Trichoderma reesei,* the genus *Aspergillus,* preferably *Aspergillus niger,* the genus *Geobacillus,* preferably *Geobacillus stearothermophilus,* the genus *Pediococcus,* preferably *Pediococcus pentosaceus,* and the genus *Kluyveromyces,* preferably *Kluyveromyces lactis* to provide slowly digestible compounds.

The fermentation 140b of liquid 2 to yield slowly digestible compounds is done analogously to step 140 of fermenting the unfermented beverage.

In some embodiments, the slowly digestible compounds produced by fermenting liquid 2 encompasses various types, including but not limited to lactic acid, acetic acid, succinic acid, citric acid, malic acid, sugar alcohols such as glycerine, erythritol, xylitol, sorbitol, mannitol, maltitol, isomalt, hydrogenated starch hydrolysates, polysaccharides such as glucans, fructans, galactans, dextrans, curdlans, xylans, hemicelluloses, resistant starches, resistant dextrins, cluster dextrin, isomaltulose, isomalto-oligosaccharides, resistant maltodextrin, polydextrose, inulin, fructooligosaccharides, partially hydrolyzed guar gum, acacia gum, hydrolyzed pectin, hydrolyzed cellulose, low molecular weight beta-glucans, enzymatically hydrolyzed pectin, raffinose, and raffinose oligosaccharides.

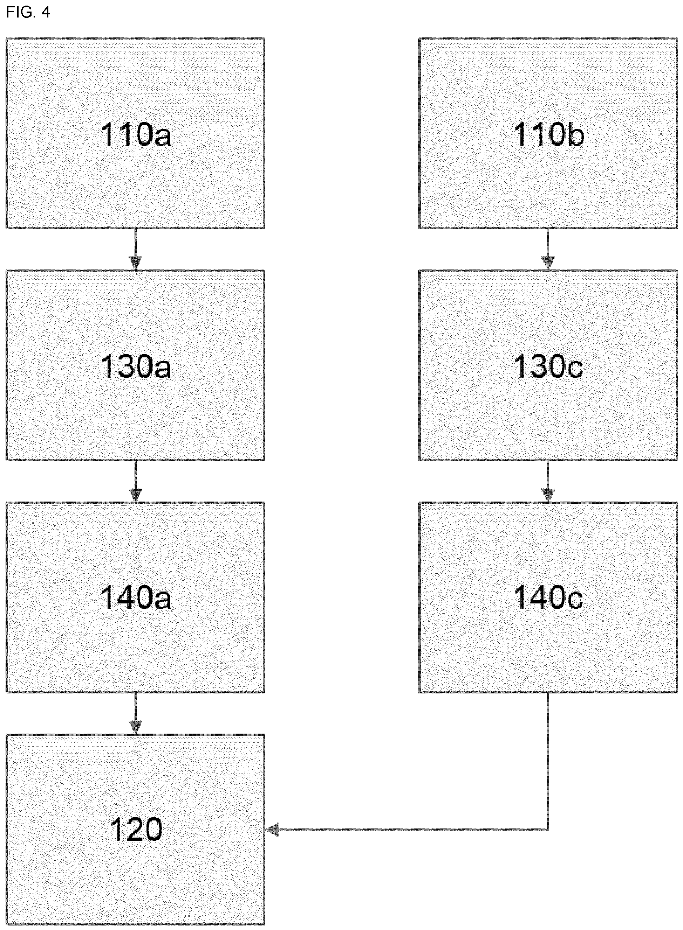

FIG. 4 presents another embodiment for preparing a fermented non-alcoholic plant-based beverage, comprising the steps of providing 110a liquid 1, providing 110b liquid 2, combining 130a liquid 1 with at least one microorganism, combining 130c liquid 2 with enzymes, fermenting 140a liquid 1 to yield the fermented beverage, enzymatically converting 140c liquid 2 to yield slowly digestible compounds, and combining 120 the fermented beverage with the slowly digestible compounds creating the fermented non-alcoholic plant-based beverage.

In some embodiments, the slowly digestible compounds produced by combining 130c liquid 2 and enzymatically converting 140c liquid 2 involves the use of at least one enzyme comprising of *pullulanases, glucanases, xylanases, alpha-1,2-glycosyltransferases, alpha-1,3-glycosyltransferases, alpha-1,5-glycosyltransferases, dextransucrases, sucrose isomerase, sucrose synthase, cyclodextrin glycosyltransferase, glycogen synthase, 4-alpha-glucanotransferase, glucose isomerase, fructosyltransferase, amylomaltase, glycogen branching enzymes, trehalose synthase, trehalose phosphorylase, epimerase, and L-arabinose isomerase.*

In some embodiments, the slowly digestible compounds produced by combining 130c liquid 2 and enzymatically converting 140c liquid 2 encompasses various types, including but not limited to lactic acid, acetic acid, succinic acid, citric acid, malic acid, sugar alcohols such as glycerine, erythritol, xylitol, sorbitol, mannitol, maltitol, isomalt, hydrogenated starch hydrolysates, polysaccharides such as glucans, fructans, galactans, dextrans, curdlans, xylans, hemicelluloses, resistant starches, resistant dextrins, cluster dextrin, isomaltulose, isomalto-oligosaccharides, resistant maltodextrin, polydextrose, inulin, fructooligosaccharides, partially hydrolyzed guar gum, acacia gum, hydrolyzed pectin, hydrolyzed cellulose, low molecular weight beta-glucans, enzymatically hydrolyzed pectin, raffinose, and raffinose oligosaccharides.

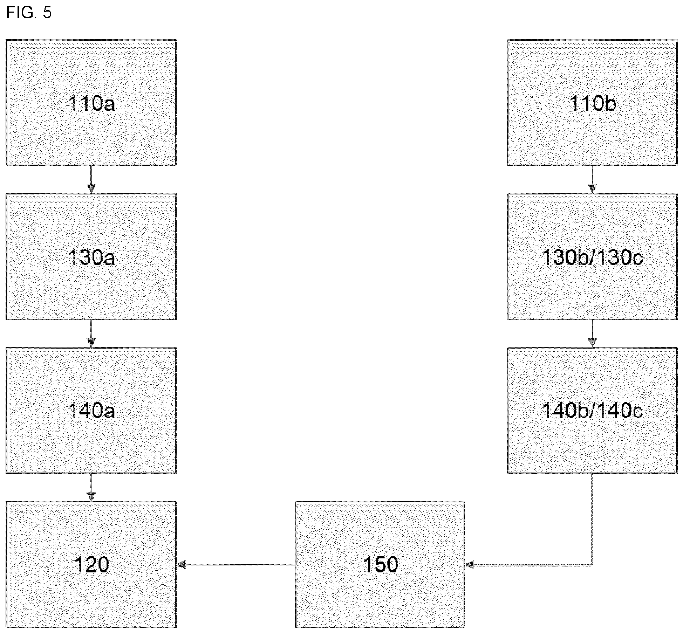

FIG. 5 presents another embodiment of preparing a fermented non-alcoholic plant-based beverage, comprising the steps of providing 110a liquid 1, providing 110b liquid 2, combining 130a liquid 1 with at least one microorganism, combining 130b liquid 2 with at least one microorganism or 130c with enzymes, fermenting 140a the liquid 1 to yield the fermented beverage, fermenting 140b or enzymatically converting 140c liquid 2 to yield slowly digestible compounds, drying or concentrating 150 the fermented or enzymatically converted liquid 2 to yield slowly digestible compounds and combining 120 the fermented beverage with the slowly digestible compounds creating the fermented non-alcoholic plant-based beverage.

In some embodiments, the drying or concentrating 150 of the fermented or enzymatically converted liquid 2 can involve but is not limited to spray drying, freeze drying (lyophilization), vacuum drying, drum drying, fluidized bed drying, refractance window drying, belt drying, rotary drying, convective drying, infrared drying, microwave drying, supercritical CO2 drying, osmotic dehydration, evaporation, membrane concentration (including reverse osmosis, nanofiltration, and ultrafiltration), centrifugation, falling film evaporation, rising film evaporation, and freeze concentration or any combination thereof.

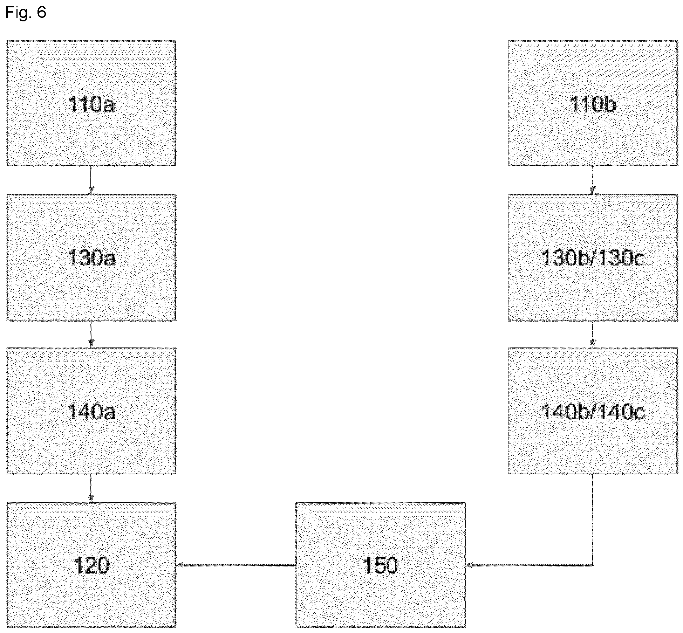

FIG. 6 presents another embodiment of preparing a fermented non-alcoholic plant-based beverage, comprising the steps of providing 110a liquid 1, providing 110b liquid 2, combining 130b liquid 2 with at least one microorganism or 130c with enzymes, fermenting 140b or enzymatically converting 140c liquid 2 to yield slowly digestible compounds, drying or concentrating 150 the fermented or enzymatically converted liquid 2 to yield slowly digestible compounds, combining 120 liquid 1 with slowly digestible compounds creating the unfermented beverage, combining 130 the unfermented beverage with at least one microorganism, and fermenting 140 the unfermented beverage creating the fermented non-alcoholic plant-based beverage.

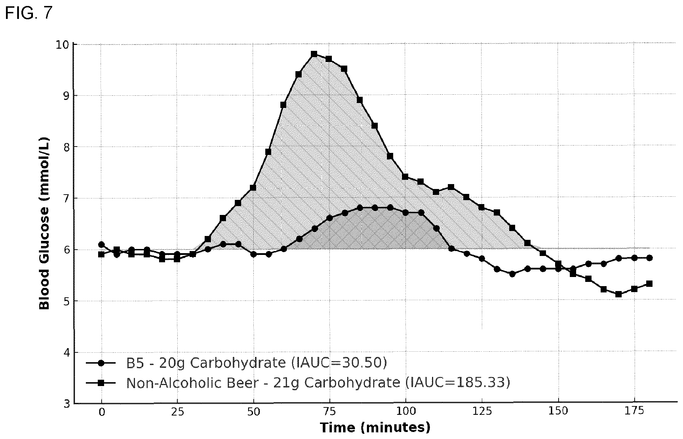

FIG. 7 illustrates the blood sugar response over time and resulting incremental area under the curve (IAUC) from intake of a beverage according to the present invention comprising 20 g carbohydrates (B5), and a commercial non-alcoholic beer comprising 21 g carbohydrates. For each sample 330ml fluid was ingested. The non-alcoholic plant-based beverage B5 contains 0.3 vol% ethanol and 6 g/100 ml carbohydrates of which 3.5 g/100 ml are slowly digestible compounds. The commercial example contains < 0.5 vol% ethanol and 6.5 g/100 ml carbohydrates. The Glycemic index of the fermented non-alcoholic plant-based beverage B5 is calculated by 100*(30.5/(185.33*(20/21)) = 15.7.

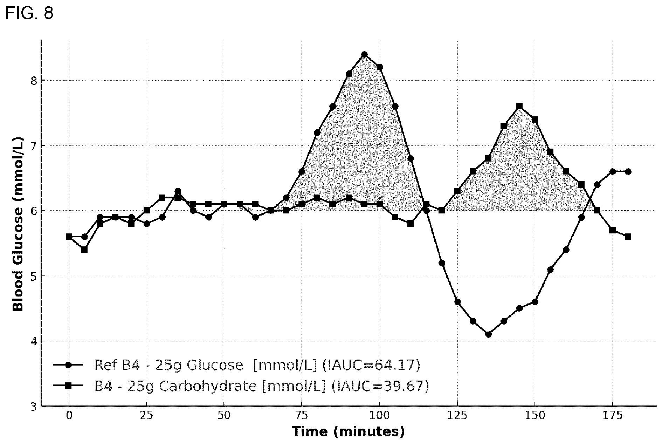

FIG. 8 illustrates the blood sugar response over time and resulting incremental area under the curve (IAUC) from intake of 25g glucose (Ref B4), a beverage according to the present invention with a total carbohydrate content of 25g carbohydrates (B4). For each sample 330ml fluid was ingested. The fermented non-alcoholic plant-based beverage B4 contains 0.3 vol% ethanol and 7.5 g/100 ml carbohydrates of which 5 g/100 ml are slowly digestible compounds. The Glycemic index of the fermented non-alcoholic plant-based beverage B4 is calculated by 100*(39.67/64.17) = 61.8.

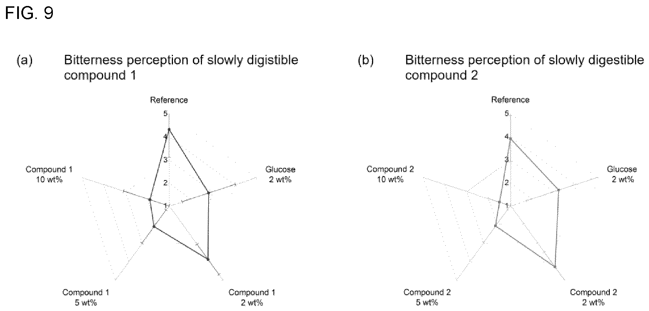

FIG. 9 illustrates the result of a multiple sample sensory ranking test performed by a trained panel n = 16 or 18, depending on the test depicting the bitterness perception of the fermented non-alcoholic plant-based beverage according to the present invention. The spider chart compares the beverage mixed with varying concentrations of a slowly digestible compound to the beverage mixed with glucose instead of slowly digestible compounds, as well as a reference sample without the addition of either glucose or slowly digestible compounds. Prior to tasting, the non-alcoholic plant-based beverage was degassed and maintained at room temperature.

The study included five samples: A reference sample consisting of the non-alcoholic plant-based beverage only, a sample containing 2 wt% of glucose mixed with the non-alcoholic plant-based beverage and three samples containing different concentrations (2, 5, and 10 wt%) of either (a) slowly digestible compound 1 or (b) slowly digestible compound 2 mixed with the non-alcoholic plant-based beverage. Herein, slowly digestible compound 1 is derived from wheat and slowly digestible compound 2 is derived from maize.

As shown in Figure 9, the sample with added slowly digestible carbohydrate exhibited a significantly lower bitterness perception at a concentration of 5 wt% or more compared to the control. Simultaneously, the samples with added slowly digestible carbohydrate concentration of 5 wt% or higher showed similar or even greater effect in masking bitterness as the sample with added rapidly digestible carbohydrates (glucose).

Other slowly digestible compounds having similar structural and/ or functional properties are expected to exhibit comparable behavior. The evaluation scale ranges from 1 to 5, with 5 being the bitterest and 1 being the least bitter.

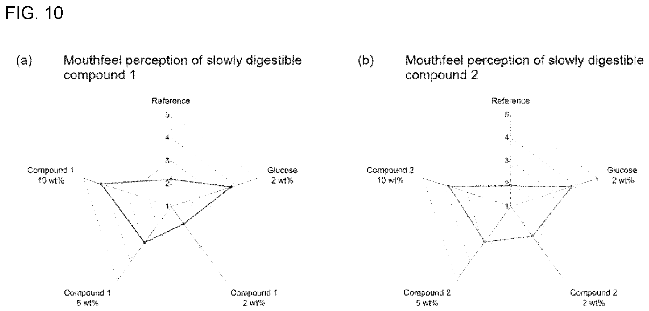

FIG. 10 illustrates the result of a multiple sample sensory ranking test performed by a trained panel n = 16 or 18, depending on the test depicting the mouthfeel perception of the fermented non-alcoholic plant-based beverage according to the present invention. The spider chart compares the beverage mixed with varying concentrations of a slowly digestible compound to the beverage mixed with glucose instead of slowly digestible compounds, as well as a reference sample without the addition of either glucose or slowly digestible compounds. Prior to tasting, the non-alcoholic plant-based beverage was degassed and maintained at room temperature.

The study included five samples: A reference sample consisting of the non-alcoholic plant-based beverage only, a sample containing 2 wt% of glucose mixed with the non-alcoholic plant-based beverage and three samples containing different concentrations (2, 5, and 10 wt%) of either (a) slowly digestible compound 1 or (b) slowly digestible compound 2 mixed with the non-alcoholic plant-based beverage. Herein, slowly digestible compound 1 is derived from wheat and slowly digestible compound 2 is derived from maize.

As shown in Figure 10, the sample with added slowly digestible carbohydrate exhibited a significantly higher mouthfeel perception at a concentration of 5 wt% or more compared to the control. Simultaneously, the sample with added slowly digestible carbohydrate concentration of 10 wt% showed similar or even greater effect in providing a higher mouthfeel perception as the sample with added rapidly digestible carbohydrates (glucose).

Other slowly digestible compounds having similar structural and/ or functional properties are expected to exhibit comparable behavior. The evaluation scale ranges from 1 to 5, with 5 being the highest level of mouthfeel and 1 being the lowest level of mouthfeel.

### Examples

EXAMPLE 1 (NEGATIVE EXAMPLE): A liquid was prepared using 58 kg malts and 450 L of water as raw materials. The water had a mean hardness of 15.7 °fH, and a specific salt profile was achieved by adding 50 g of CaSO₄, 100 g of CaCl₂, and 15 g of NaCl. The malt bill consisted of 25 kg Pilsner malt, 25 kg "Carapils" and 8 kg wheat malt. The liquid was subjected to high-temperature mashing with a strike temperature of 73.2 °C, a temperature-drop to 72.7 °C after adding the malts and a mash holding temperature of 74 °C. The mash holding temperature was maintained for 40 minutes after which the liquid was separated from the residual solid plant material. The solid plant material was rinsed with 78 °C hot water, and the resulting liquid was added back to the liquid at a ratio of 0.55 L/L. A pH of 4.5 was aimed for with the addition of 220 ml lactic acid. The liquid was boiled for 5 minutes and then combined with 85 ml of 6% isomerized hop extract to achieve an IBU of 10. After cooling, 2.5 10⁴ CFU/ml maltose-negative *Saccharomyces Cerevisiae* was added at a temperature of 22 °C. The liquid was subsequently fermented for 90 h at a temperature of 20 °C, producing the fermented non-alcoholic beverage with an ethanol content of less than 0.5 vol%, a digestible carbohydrate content of 50 g/L of which the maltose content was 25 g/L and the glucose content was less than 1 g/L. Dietary fibers classified as slowly digestible non-fermentable compounds were added to the fermented liquid. Wherein the dietary fibers comprised resistant starches type 4 with a DP of 24 at 50 g/L. After the addition the fermented liquid was pasteurized at a mean core temperature of 65 °C with a holding time of 3 minutes and then homogeneously carbonated. A Glycemic index of over 70 was exhibited compared to a glucose reference with the same concentration in digestible carbohydrates as the sample (50 g/L).

EXAMPLE 2: A fermented non-alcoholic plant-based beverage was produced by using the method described in Example 1, with a modified malt bill consisting of 25 kg "Carahell" barley malt and 8 kg wheat malt. The mash holding temperature was set to 76 °C. With the addition of 25 kg resistant starches type 4 with DP of 24 before boiling, a slowly digestible compound content of 5 wt% was achieved. Additional aroma hops, consisting of 50 g "Mosaic" hops and 50 g "Galaxy spectrum" hops, were added while the liquid was still hot after boiling. The lactic acid was exchanged with citric acid and 2.5 10⁴ CFU/ml *Saccharomyces Cerevisiae* yeast was added at a temperature of the liquid of 25 °C. The fermented beverage contained less than 0.5 vol% ethanol, 25 g/L of digestible carbohydrates of which 2 g/L was maltose and 50 g/L of slowly digestible compounds of which 50 g/L were dietary fibers. A Glycemic index of under 70 was exhibited compared to a glucose reference with the same concentration in digestible carbohydrates as the sample (25 g/L).

EXAMPLE 3: A fermented non-alcoholic plant-based beverage was produced by using the method described in Example 1, with a modified malt bill consisting of 20 kg "Carahell" barley malt and 13 kg wheat. The mash holding temperature was set to 76 °C with a temperature drop to 75.2 °C after adding the malts. 500 L of liquid was collected. Aroma hops, consisting of 35 g "Mosaic" hops and 25 g "Galaxy spectrum" hops, were added to each batch while the liquid was still hot after boiling. The amount of resistant starches type 4 with DP of 24 needed for a concentration of 3.5 wt% was added. 2.5 10⁶ CFU/ml *Lachanacea Thermotolerans* yeast was added at a temperature of 31 °C. The fermented beverage contained less than 0.5 vol% ethanol, 25 g/L of digestible carbohydrates and 36 g/L of slowly digestible compounds of which 1 g/L was lactic acid and 35 g/L were dietary fibers. A Glycemic index of under 60 was exhibited compared to a glucose reference with the same concentration in digestible carbohydrates as the sample (25 g/L).

EXAMPLE 4: Combining 15kg "Carahell" barley malt from Weyermann and 15kg wheat germ with 500L water at a temperature of 49 °C resulted in a mashing temperature of 48 °C. The mash was kept for 40 min at 48 °C before separating the liquid from the residual solid plant material. The liquid contained 17 g/L of digestible carbohydrates of which 7 g/L was glucose, 2 g/L was maltose and 8 g/L were other carbohydrates. The liquid was combined with 85 ml of 6% isomerized hop extract and 25 g/L of slowly digestible compounds of which 25 g/L was hydrolyzed inulin. The unfermented beverage was cooled to 20 °C and combined with a maltose-negative *Saccharomyces Cerevisiae* strain in a freeze dried form using a pitching rate of 2.5 10⁶ CFU/ml. Fermentation was carried out at 20 °C for 72 h before cooling to 4 °C and keeping the fermentation at that temperature for another 72 h providing a fermented beverage with 0.5 vol% ethanol and a digestible carbohydrate content of 10 g/L of which 2 g/L was maltose and 8 g/L were other carbohydrates. The fermented beverage was carbonated to 7 g/L CO2 and filled in cans and pasteurized at 65 °C core temperature for 10 min creating the fermented non-alcoholic plant-based beverage exhibiting a Glycemic index below 70 compared to a glucose reference with the same concentration in digestible carbohydrates as the sample (10 g/L).

EXAMPLE 5: Combining 15 kg "Carahell" barley malt and 15kg wheat germ from Weyermann with 500 L water at a temperature of 49 °C resulted in a mashing temperature of 48 °C. The mash was kept for 40 min at 48 °C before separating the liquid from the residual solid plant material. The liquid contained 17 g/L of digestible carbohydrates of which 7 g/L was glucose and 2 g/L was maltose and 8 g/L were of other carbohydrates. The liquid was combined with 85 ml of 6% isomerized hop extract and 25 g/L of slowly digestible compounds of which 25 g/L was hydrolyzed inulin. The unfermented beverage was cooled to 20 °C and combined with a maltose-negative *Saccharomyces Cerevisiae* strain in a freeze dried form using a pitching rate of 2.5 10⁶ CFU/ml. Fermentation was carried out at 20 °C for 72 h before cooling to 4 °C and keeping the fermentation at that temperature for another 72 h providing a fermented beverage with 0.5 vol% ethanol and a digestible carbohydrate content of 10 g/L of which 2 g/L was maltose and 8 g/L were other carbohydrates. The fermented beverage was carbonated to 7 g/L CO2 and filled in cans and pasteurized at 65 °C core temperature for 10 min creating the fermented non-alcoholic plant-based beverage exhibiting a Glycemic index below 55 compared to a glucose reference with the same concentration in digestible carbohydrates as the sample (10 g/L).

EXAMPLE 6: Combining 25 kg "Carahell" barley malt and 8 kg wheat flakes from Weyermann with 500 L water at a temperature of 77 °C resulted in a mashing temperature of 76 °C. The mash was kept for 40 min at 76 °C before separating the liquid from the residual solid plant material. The liquid contained 14 g/L of digestible carbohydrates of which 4 g/L was glucose and 2 g/L was maltose and 8 g/L were other carbohydrates. The liquid was combined with 85 ml of 6% isomerized hop extract. The liquid was cooled to 20 °C and combined with a maltose-negative *Saccharomyces Cerevisiae* strain in a freeze dried form using a pitching rate of 2.5 10⁶ CFU/ml. Fermentation was carried out at 20 °C for 72 h before cooling to 4 °C and keeping the fermentation at that temperature for another 72 h providing a fermented beverage with 0.3 vol% ethanol and 10 g/L of digestible carbohydrates of which 2 g/L was maltose and 8 g/L were other carbohydrates. 15 g/L slowly digestible compounds of which 15 g/L was fructose were added to the fermented beverage, and it was carbonated to 7 g/L CO2 creating the fermented non-alcoholic plant-based beverage exhibiting a Glycemic index below 70 compared to a glucose reference with the same concentration in digestible carbohydrates as the sample (10 g/L).

EXAMPLE 7: Combining 50 kg germinated and crushed alfalfa seeds and 25 kg apple juice with 500L water at a temperature of 20 °C resulted in a mashing temperature of 20 °C. The mash was kept for 24 h at 20 °C before separating the liquid from the residual solid plant material. The liquid contained 70 g/L of digestible carbohydrates of which 20 g/L was glucose, 20 g/L was fructose and 30 g/L were other carbohydrates and 60 g/L proteins. The liquid was combined with 3 g/L of polyphenols of which 3 g/L was green tea catechin extract and heated to 80 °C and cooled down to 20 °C to form the particles containing protein and polyphenols. The liquid was combined with a maltose-negative and crab-tree negative *Pichia Kluyveri* strain from a liquid culture using a pitching rate of 2.5 10⁶ CFU/ml. Fermentation was carried out under continuous recirculation and addition of oxygen at 20 °C for 72 h before cooling to 4 °C and stopping the recirculation and introduction of oxygen. The fermentation was kept at that temperature for another 72 h providing a fermented beverage with 0.03 vol% ethanol, 30 g/L of digestible carbohydrates, 60 g/L of slowly digestible compounds comprising polyphenols and protein and 60 g/L proteins. The fermented beverage was carbonated to 7 g/L CO2 creating the fermented non-alcoholic plant-based beverage exhibiting a Glycemic index below 60 compared to a glucose reference with the same concentration in digestible carbohydrates as the sample (30 g/L).

EXAMPLE 8: Combining 25 kg "Carahell" barley malt from Weyermann and 15kg corn germ from purple corn with 500 L water at a temperature of 49 °C resulted in a mashing temperature of 48 °C. The mash was kept for 120 min at 48 °C before separating liquid 1 from the residual solid plant material. Liquid 1 contained 22 g/L of digestible carbohydrates of which 6 g/L was glucose and 3 g/L was maltose and 13 g/L were other carbohydrates. After separating liquid 1 from the residual solid plant-derived material, water with a temperature of 72 °C was combined with it. The resulting mash temperature was 68 °C and was kept for 60 min. Then liquid 2 was separated from the residual solid plant-derived material containing 40 g/L maltose. Liquid 1 was combined with 85 ml of 6% isomerized hop extract. Liquid 1 was cooled to 20 °C and combined with a maltose-negative *Saccharomyces Cerevisiae* strain in a freeze dried form using a pitching rate of 2.5 10⁶ CFU/ml. Fermentation was carried out at 20 °C for 72 h before cooling to 4 °C and keeping the fermentation at that temperature for another 72 h providing a fermented beverage with 0.3 vol% ethanol and 15g/L of digestible carbohydrates of which 2 g/L was maltose and 13 g/L were other carbohydrates. Liquid 2 was combined with 5 10⁷ CFU/m. *Leuconostoc mesenteroides* at 30 °C and adjusted to pH = 6. Fermentation was carried out at 30 °C for 72 h before cooling to 4 °C and keeping the fermentation at that temperature for another 72 h providing 27 g/L of slowly digestible compounds of which 20 g/L were dextrans and 7 g/L was fructose. The fermented liquid 2 was then combined with the fermented beverage and carbonated to 7 g/L CO2. The resulting fermented non-alcoholic plant-based beverage contained 0.15 vol% ethanol, 8.5 g/L of digestible carbohydrates of which 1 g/L was maltose, 7.5 g/L were other carbohydrates, 13.5 g/L of slowly digestible compounds of which 10 g/L were dextrans and 3.5 g/L was fructose exhibiting a Glycemic index below 50 compared to a glucose reference with the same concentration in digestible carbohydrates as the sample (8.5 g/L).

EXAMPLE 9: Combining 25 kg "Carahell" barley malt from Weyermann and 15kg corn germ from purple corn with 500 L water at a temperature of 49 °C resulted in a mashing temperature of 48 °C. The mash was kept for 120 min at 48 °C before separating liquid 1 from the residual solid plant material. Liquid 1 contained 22g/L of digestible carbohydrates of which 6 g/L was glucose and 3 g/L was maltose and 13 g/L were other carbohydrates. After separating liquid 1 from the residual solid plant-derived material, water at a pH of 7 containing the enzyme glucoamylase and glucose-isomerase with a temperature of 60 °C was combined with the residual solids. The resulting mash temperature was 55 °C and was kept for 60 min. Then liquid 2 was separated from the residual solid plant-derived material containing 55 g/L of slowly digestible compounds of which 55 g/L was fructose. Liquid 2 was combined with the enzyme fructosyltransferase to yield 25 g/L fructooligosaccharides (FOS). Liquid 2 was then vacuum distilled into a syrup containing 600 g/L FOS. Liquid 1 was combined with 85 ml of 6% isomerized hop extract. Liquid 1 was cooled to 20 °C and combined with a maltose-negative *Saccharomyces Cerevisiae* strain in a freeze dried form using a pitching rate of 2.5 10⁶ CFU/ml. Fermentation was carried out at 20 °C for 72 h before cooling to 4 °C and keeping the fermentation at that temperature for another 72 h providing a fermented beverage with 0.3 vol% ethanol and 15 g/L of digestible carbohydrates of which 2 g/L was maltose and 13 g/L were other carbohydrates. The FOS syrup was then combined with the fermented beverage at a ratio 1:20 and carbonated to 7 g/L CO2. The resulting fermented non-alcoholic plant-based beverage contained 0.15 vol% ethanol, 8.5 g/L of digestible carbohydrates of which 1 g/L was maltose, 7.5 g/L were other carbohydrates, 30 g/L of slowly digestible compounds of which 30 g/L were FOS exhibiting a Glycemic index below 50 compared to a glucose reference with the same concentration in digestible carbohydrates as the sample (8.5 g/L).

EXAMPLE 10: Combining 30 kg of Chicory concentrate with 10 g/ 100 g fermentable carbohydrates, 8 g/ 100g unfermentable but digestible carbohydrates and 50 g/ 100 g unfermentable and indigestible carbohydrates with 470 L water at a temperature of 80 °C to provide the liquid. The liquid contained 10.8 g/L of digestible carbohydrates of which 2 g/L was glucose and 4 g/L was fructose and 4.8 g/L were unfermentable and digestible carbohydrate, and 30 g/L of unfermentable and not digestible carbohydrates. 10 kg of inulin powder was dissolved in the liquid before cooling it to 20 °C. The liquid was then combined with a *Saccharomyces Cerevisiae* strain using a pitching rate of 2.5 10⁶ CFU/ml. Fermentation was carried out at 20 °C for 72 h before cooling to 4 °C and keeping the fermentation at that temperature for another 72 h providing a fermented non-alcoholic plant-based beverage with 0.3 vol% ethanol, 4.8 g/L of digestible carbohydrates and 48 g/L of slowly digestible compounds exhibiting a Glycemic index below 50 compared to a glucose reference with the same concentration in digestible carbohydrates as the sample (4.8 g/L).

EXAMPLE 11: Combining 30 kg of passion fruit puree with 50 g/ 100 g fermentable carbohydrates, 50 g/ 100 g unfermentable carbohydrates with 470 L water at a temperature of 80 °C to provide the liquid. The liquid contained 60 g/L of digestible carbohydrates of which 15 g/L was glucose and 15 g/L was fructose, 30 g/L were other carbohydrates. 10 kg of low viscosity pectin powder was dissolved in the liquid before cooling it to 20 °C and providing the unfermented beverage. The liquid was combined with a maltose-negative and crab-tree negative *Pichia Kluyveri* strain from a liquid culture using a pitching rate of 2.5 10⁶ CFU/ml. Fermentation was carried out under continuous recirculation and addition of oxygen at 20 °C for 72 h before cooling to 4 °C and stopping the recirculation and introduction of oxygen providing a fermented beverage with 0.03 vol% ethanol, 10 g/L digestible carbohydrates and 40 g/L slowly digestible compounds. The fermented beverage was carbonated to 7 g/L CO2 creating the fermented non-alcoholic plant-based beverage exhibiting a Glycemic index below 70 compared to a glucose reference with the same concentration in digestible carbohydrates as the sample (10 g/L).

EXAMPLE 12: Combining 200 L of apple juice with 300 L water at a temperature of 80 °C to provide the liquid. The liquid contained 40 g/L of digestible carbohydrates of which 20 g/L was glucose and 20 g/L was fructose. 15 kg of low viscosity pectin powder was dissolved in the liquid before cooling it to 20 °C and providing the unfermented beverage. The liquid was combined with a maltose-negative and crab-tree negative *Pichia Kluyveri* strain from a liquid culture using a pitching rate of 2.5 10⁶ CFU/ml. Fermentation was carried out under continuous recirculation and addition of oxygen at 20 °C for 72 h before cooling to 4 °C and stopping the recirculation and introduction of oxygen providing a fermented beverage with 0.03 vol% ethanol, 10 g/L digestible carbohydrates and 30 g/L slowly digestible compounds. The fermented beverage was carbonated to 7 g/L CO2 creating the fermented non-alcoholic plant-based beverage exhibiting a Glycemic index below 70 compared to a glucose reference with the same concentration in digestible carbohydrates as the sample (10 g/L).

EXAMPLE 13: Combining 50 kg of cut Chicory root with 10 g/ 100 g fermentable carbohydrates, 6 g/ 100g unfermentable but digestible carbohydrates and 30 g/ 100 g unfermentable and indigestible carbohydrates with 470 L water at a temperature of 80 °C to provide the liquid. The solid residuals of the Chicory root were removed from the liquid via filtration. The liquid contained 11 g/L of digestible carbohydrates of which 2 g/L was glucose and 4 g/L was fructose and 5 g/L were unfermentable and digestible carbohydrates, and 25 g/L of unfermentable and not digestible carbohydrates. The liquid was cooled to 20 °C then combined with a *Saccharomyces Cerevisiae* strain using a pitching rate of 2.5 10⁶ CFU/ml. Fermentation was carried out at 20 °C for 72 h before cooling to 4 °C and keeping the fermentation at that temperature for another 72 h providing a fermented non-alcoholic plant-based beverage with 0.3 vol% ethanol, 4.8 g/L of digestible carbohydrates and 25 g/L of slowly digestible compounds exhibiting a Glycemic index below 50 compared to a glucose reference with the same concentration in digestible carbohydrates as the sample (4.8 g/L).

## Claims

1. A method for producing a fermented non-alcoholic plant-based beverage which exhibits a Glycemic index below 70 when compared to a glucose reference with the same digestible carbohydrate content, the method comprising the following steps not limited to the recited sequence
a) providing a liquid from plant-derived material comprising digestible carbohydrates that are degraded during fermentation and comprising less than 20 g/L rapidly digestible carbohydrates that are not degraded during fermentation
b) introducing slowly digestible compounds that are not degraded during fermentation to the liquid
c) adding at least one microorganism to the liquid
d) fermenting the liquid creating the fermented non-alcoholic plant-based beverage.

2. The method of the preceding claim wherein the fermented non-alcoholic plant-based beverage exhibits a Glycemic index below 55 compared to a glucose reference with the same digestible carbohydrate content.

3. The method of any of the preceding claims wherein the fermented non-alcoholic plant-based beverage shows organoleptic properties including mouthfeel and bitterness perception substantially similar to an equivalent beverage having a Glycemic index above 70 compared to a glucose reference with the same digestible carbohydrate content while maintaining a viscosity range of 1-10 mPa·s.

4. The method of any of the preceding claims wherein the liquid from plant-derived material comprises digestible carbohydrates that are degraded during fermentation and comprises less than 10 g/L rapidly digestible carbohydrates that are not degraded during fermentation.

5. The method of any of the preceding claims wherein the slowly digestible compounds comprise dietary fibers.

6. The method of any of the preceding claims wherein the slowly digestible compounds comprise polyphenol-protein complexes and dietary fibers.

7. The method of any of the preceding claims wherein the at least one microorganism is added to the unfermented beverage resulting in a pitch rate between 10³ - 10⁹ CFU/ml.

8. The method of any of the preceding claims wherein slowly digestible compounds are introduced to the liquid after fermentation.

9. The method of any of the preceding claims wherein the slowly digestible compounds that are not degraded during fermentation are provided by
a) Combining plant-derived material with water forming a solid-liquid mixture
b) Extracting digestible carbohydrates that are not degraded during fermentation
c) Enzymatically converting the digestible carbohydrates into a form that can be degraded during fermentation
d) Separating the residual solid plant-derived material from the solid-liquid mixture creating a fermentable liquid
e) Inoculating the fermentable liquid with at least one microorganism
f) Fermenting the liquid creating the slowly digestible compounds that are no longer degraded during fermentation.

10. The method of any of the preceding claims wherein the slowly digestible compounds are provided by enzymatically converting carbohydrates into slowly digestible compounds that are not degraded during fermentation.

11. The method of any of the preceding claims providing a fermented non-alcoholic plant-based beverage comprising
a) less than 0.5 vol% ethanol
b) 5-150 g/L slowly digestible compounds
c) less than 20 g/L rapidly digestible carbohydrates
wherein the fermented non-alcoholic plant-based beverage exhibits a Glycemic index below 70 compared to a glucose reference with the same digestible carbohydrate content.

12. A fermented non-alcoholic plant-based beverage made according to any of the preceding claims comprising
d) less than 0.5 vol% ethanol
e) 5-150 g/L slowly digestible compounds
f) less than 20 g/L rapidly digestible carbohydrates
wherein the fermented non-alcoholic plant-based beverage exhibits a Glycemic index below 70 compared to a glucose reference with the same digestible carbohydrate content.

13. A fermented non-alcoholic plant-based beverage according to any of the preceding claims comprising
a) less than 0.5 vol% ethanol
b) 5-150 g/L slowly digestible compounds
c) less than 20 g/L rapidly digestible carbohydrates
wherein the fermented non-alcoholic plant-based beverage exhibits a Glycemic index below 55 compared to a glucose reference with the same digestible carbohydrate content and shows organoleptic properties including mouthfeel and bitterness perception substantially similar to an equivalent beverage having a Glycemic index above 70 while maintaining a viscosity range of 1-10 mPa·s.

14. A fermented non-alcoholic plant-based beverage according to any of the preceding claims comprising
d) less than 0.5 vol% ethanol
e) 5-150 g/L slowly digestible compounds
f) less than 10 g/L rapidly digestible carbohydrates
wherein the fermented non-alcoholic plant-based beverage exhibits a Glycemic index below 55 compared to a glucose reference with the same digestible carbohydrate content and shows organoleptic properties including mouthfeel and bitterness perception substantially similar to an equivalent beverage having a Glycemic index above 70 while maintaining a viscosity range of 1-10 mPa·s.

15. A fermented non-alcoholic plant-based beverage according to any of the preceding claims comprising
a) less than 0.5 vol% ethanol
b) 5-150 g/L slowly digestible compounds
c) less than 10 g/L rapidly digestible carbohydrates
d) more than 10 g/L protein
wherein the fermented non-alcoholic plant-based beverage exhibits a Glycemic index below 55 compared to a glucose reference with the same digestible carbohydrate content and shows organoleptic properties substantially similar to an equivalent beverage having a Glycemic index above 70 while maintaining a viscosity range of 1-10 mPa·s..
